# EUROPEAN PATENT APPLICATION

(11) **EP 4 075 686 A1**
(43) Date of publication of application: **19.10.2022**
(21) Application number: 19950304.6
(22) Date of filing: 31.10.2019
(51) Int. Cl.: H04B 10/00, G01S 7/00

(54) **LASER RADAR SYSTEM AND MOBILE PLATFORM**

(71) Applicant: Huawei Technologies Co., Ltd., Shenzhen, Guangdong 518129 (CN)
(72) Inventor: YAN, Lei, Shenzhen, Guangdong 518129 (CN); XIE, Chengzhi, Shenzhen, Guangdong 518129 (CN); XIONG, Wei, Shenzhen, Guangdong 518129 (CN)
(74) Representative: Thun, Clemens
(86) International application number: PCT/CN2019/114872
(87) International publication number: WO 2021/081946

(57) **Abstract**

A laser radar system and a mobile platform are provided, and relate to the field of photoelectric device technologies, to resolve a technical problem of a complex structure, difficult manufacturing, and difficult coupling and calibration of a conventional laser radar system (02, 20). The laser radar system (02, 20) includes a laser (021), a detector (022), and an optical component (10). The laser (021) is configured to generate an emitted beam, the detector (022) is configured to receive a reflected beam, and the optical component (10) includes an emitted-beam processing part (11) and a reflected-beam processing part (12). The emitted-beam processing part (11) is configured to bend the emitted beam and emit the emitted beam to an irradiated object (03, 30), and the reflected-beam processing part (12) is configured to focus the reflected beam reflected by the irradiated object (03, 30) and emit the reflected beam to the detector (022). The laser radar system (02) has a simple and compact structure, and is easy to implement a lightweight and miniaturized design and easy to manufacture, so that a manufacturing process can be simplified, mass production can be facilitated, and coupling and calibration difficulty can be reduced.

## Description

### TECHNICAL FIELD

This application relates to the field of photoelectric device technologies, and in particular, to a laser radar system, and a mobile platform.

### BACKGROUND

With advancement of science and technology, an application scope of a laser radar system is effectively increased. For example, with continuous development of autonomous driving technologies, the laser radar system starts to be widely applied to vehicles, to effectively detect, identify, and classify a road condition, helping improve an autonomous driving function of the vehicle. As requirements for vehicle autonomous driving become increasingly high, the laser radar system needs to have performance of higher resolution (for example, greater than 100 lines), a larger field of view (for example, greater than 120°), and a longer detection distance (for example, greater than 200 m). Beyond that, it is also expected that the laser radar system can be miniaturized and integrated.

A laser radar system usually includes an optical system component, configured to process (for example, collimate and bend) a laser light ray. However, a conventional optical system component has a complex structure and a large quantity of components. As a result, miniaturization and integration of the laser radar system is affected.

### SUMMARY

This application provides a laser radar system that is highly integrated and easy to manufacture and install, and a mobile platform.

In an implementation provided in this application, a laser radar system includes a laser, a detector, and an optical component. The laser is configured to generate an emitted beam, and the detector is configured to receive a reflected beam. The optical component is configured to process the emitted beam generated by the laser and then emit the processed emitted beam to an irradiated object, and is further configured to process a reflected beam reflected by the irradiated object and then emit the processed reflected beam to the detector. Specifically, the optical component has an emitted-beam processing part and a reflected-beam processing part. The emitted-beam processing part is configured to bend the emitted beam generated by the laser and then emit the emitted beam to the irradiated object, and the reflected-beam processing part is configured to focus the reflected beam reflected by the irradiated object and then emit the reflected beam to the detector. The reflected beam is formed after the emitted beam generated by the laser is reflected by the irradiated object. It may be understood that the irradiated object may be an entity such as a building, an animal, or a plant. Specifically, the emitted-beam processing part may be configured to receive the emitted beam generated by the laser, and bend the emitted beam, to change an optical path of the beam (in some implementations, the emitted-beam processing part may also perform processes such as focusing and shaping the emitted beam). After passing through the emitted-beam processing part, the emitted beam is directed toward the irradiated object. The reflected-beam processing part is configured to receive the reflected beam reflected by the irradiated object, and focus the reflected beam, so that the beam can be well projected onto the detector. In this process, the emitted-beam processing part bends the emitted beam, to separate the emitted beam and the reflected beam that pass through the optical component, so that the laser and the detector can be placed at different locations, to prevent mutual influence (for example, location interference and mutual blocking) between the laser and the detector.

In an implementation provided in this application, the emitted-beam processing part and the reflected-beam processing part in the optical component are fastened as a whole, so that a quantity of required brackets can be reduced, and a miniaturized and integrated design of the optical component can be implemented.

For example, in an actual application, the optical component usually needs to be installed in the laser radar system by using a bracket. Because the emitted-beam processing part and the reflected-beam processing part are fastened as an integrated structure, the optical component may be fixedly installed in the laser radar system by using one bracket. In addition, complex and difficult coupling and calibration operations are simplified. In a specific implementation, there are various specific forms in which the emitted-beam processing part and the reflected-beam processing part are fastened as a whole. For example, the emitted-beam processing part and the reflected-beam processing part may be optical components independent of each other, and the emitted-beam processing part and the reflected-beam processing part may be bonded by using an optical adhesive material such as Canada balsam, fir resin adhesive, epoxy adhesive, or polyurethane adhesive. In addition, the emitted-beam processing part and the reflected-beam processing part may alternatively be an integrated structure. In other words, the emitted-beam processing part and the reflected-beam processing part may be manufactured into an integrally-formed structure by using a process such as injection molding.

In a specific implementation, the emitted-beam processing part may include a first incident surface, a reflective surface, and a first emergent surface. The emitted beam is directed toward the irradiated object after passing through the first incident surface, the reflective surface, and the first emergent surface. Specifically, the reflective surface may bend the emitted beam to change a path of the emitted beam. When the first incident surface and the first emergent surface are of a non-planar structure (for example, a convex surface or a concave surface), a focal length of the emitted beam may be adjusted, so that the emitted beam can be processed into parallel light.

In an actual application, to enable the emitted beam that passes through the first incident surface to be efficiently emitted from the first emergent surface after being bent by the reflective surface, a main optical axis of the first incident surface and a main optical axis of the first emergent surface are symmetrically disposed with respect to a main optical axis of the reflective surface.

For example, when the first incident surface, the reflective surface, and the first emergent surface are of a planar structure, an included angle between the main optical axis of the first incident surface (which may also be understood as a normal of the first incident surface) and the main optical axis of the reflective surface (which may also be understood as a normal of the reflective surface) may be 30°, 45°, 60°, or the like, and an included angle between the first emergent surface (which may also be understood as a normal of the first emergent surface) and the reflective surface (which may also be understood as the normal of the reflective surface) may be 30°, 45°, 60°, or the like.

In addition, to ensure that the emitted beam bent by the reflective surface can be efficiently emitted from the first emergent surface, a projection of the reflective surface on the first emergent surface is located inside the first emergent surface, that is, a projected profile of the reflective surface on the first emergent surface is smaller than or as large as a contour of the first emergent surface.

On the other side, to enable the reflected-beam processing part to effectively process the reflected beam, the light receiving and processing part may include a second incident surface and a second emergent surface, and the reflected beam is directed toward the detector after passing through the second incident surface and the second emergent surface.

In a specific implementation, the second incident surface may be of a planar structure, or may be of a convex or concave surface structure. Correspondingly, the second emergent surface may be of a planar structure, or may be of a convex or concave surface structure.

In a specific application, in order that an emitted beam that passes through the optical component is effectively directed toward the irradiated object, and further a reflected beam reflected by the irradiated object can be effectively received, the first emergent surface and the second incident surface have a same orientation. It may also be understood that both the first emergent surface and the second incident surface face the irradiated object, so that an emitted beam emitted from the first emergent surface can be effectively irradiated on the irradiated object, and a reflected beam reflected by the irradiated object can be effectively received by the second incident surface.

In some implementations, the first emergent surface, the second incident surface, and the second emergent surface may have various relative positions.

For example, in an implementation provided in this application, main optical axes of the first emergent surface, the second incident surface, and the second emergent surface coincide.

In a specific implementation, because the first emergent surface and the second incident surface have the same orientation, to prevent the first emergent surface and the second incident surface from affecting each other, a projection of the first emergent surface on the second incident surface may be located on the second incident surface. For example, the first emergent surface, the second incident surface, and the second emergent surface may be located on a same convex lens. The second emergent surface may be located on an upper surface of the convex lens, and the first emergent surface and the second incident surface may be located on a lower surface of the convex lens. Specifically, a middle part of the lower surface of the convex lens may be used as the first emergent surface, and another part of the lower surface of the convex lens may be used as the second incident surface.

In a specific implementation, the reflective surface may have various shapes. For example, the reflective surface may be of a structure such as a plane, a cylindrical surface, a spherical surface, or the like. In some specific implementations, when the reflective surface is of a non-planar structure, the reflective surface can not only implement a reflection function, but also can shape a beam. Specifically, when the reflective surface is of a concave surface structure, the reflective surface can not only reflect a beam, but also can focus a beam.

In some specific implementations, to increase reflection efficiency of the reflective surface, a high-reflective coating may be disposed on the reflective surface. In addition, in some implementations, to reduce blocking of a beam by the reflective surface, a polarizing coating may be disposed on the reflective surface, so that polarized light can be selectively blocked or transmitted, and a beam can also be efficiently reflected.

In a specific implementation, there may be various structure types of the emitted-beam processing part. For example, the emitted-beam processing part may be a columnar structure with an oblique surface at one end. The oblique surface may be used as the reflective surface, a part of an outer circumferential surface of the emitted-beam processing part may be used as the first incident surface, and an end surface opposite to the oblique surface may be used as the first emergent surface.

In some specific implementations, there may be a plurality of types of a structure of the first incident surface. For example, the first incident surface may be of a structure such as a plane, a cylindrical surface, a spherical surface, or the like. Alternatively, it may be understood that the first incident surface may be a planar structure, a concave surface structure, or a convex surface structure. When the first incident surface is of a concave surface structure or a convex surface structure, the first incident surface may also shape the emitted beam. For example, when the first incident surface is of a convex surface structure, the first incident surface may focus the emitted beam; or when the first incident surface is of a concave surface structure, the first incident surface may diverge the emitted beam.

In addition, in some specific implementations, to improve light transmission efficiency of the emitted-beam processing part, an antireflective coating may be disposed on the first incident surface or the first emergent surface.

Correspondingly, to improve light transmission efficiency of the reflected-beam processing part, antireflective coatings may also be disposed on the second incident surface and the second emergent surface of the reflected-beam processing part.

In actual application, the reflected-beam processing part may be configured to shape the reflected beam reflected by the irradiated object, to effectively project the reflected beam onto the detector. In some cases, the reflected-beam processing part may also shape the emitted beam generated by the laser.

For example, a part that is of the second incident surface in the reflected-beam processing part and that corresponds to the reflective surface in the emitted-beam processing part may also shape the emitted beam generated by the laser. It may also be understood that the first emergent surface and the second incident surface may be integrated. Specifically, a projection of the reflective surface of the emitted-beam processing part on the reflected-beam processing part is located inside the second incident surface. After being reflected by the reflective surface, the emitted beam may pass through the second incident surface, so that the second incident surface can shape the emitted beam.

In some specific implementations, the emitted-beam processing part may be two independent optical components, or may be an integrally-formed structure.

For example, in an implementation provided in this application, the emitted-beam processing part in the optical component may include a reflecting part and a collimating part that are independent of each other, and further include a collimating lens. The collimating lens has a collimating surface configured to shape a beam generated by a laser. In a specific implementation, the collimating surface may be a concave surface structure or a convex surface structure. Specifically, when the collimating surface is of a convex surface structure, a beam may be focused; or when the collimating surface is of a concave surface structure, a beam may be diverged.

In a specific implementation, the collimating surface may be set to a structure such as a plane, a convex surface, or a concave surface based on different requirements.

In addition, the collimating lens, and an emitting lens and a receiving lens may be fastened as an integrated structure.

Specifically, in some specific implementations, the emitting lens, the receiving lens, and the collimating lens may be optical components independent of each other, and may be fastened as a whole in a manner such as bonding.

For example, the emitting lens and the collimating lens may be of an integrated structure, that is, the emitting lens and the collimating lens may be integrally formed by using a process such as injection molding, to effectively simplify a manufacturing process.

For example, the receiving lens and the collimating lens may be of an integrated structure, that is, the receiving lens and the collimating lens may be integrally formed by using a process such as injection molding, to effectively simplify a manufacturing process.

In addition, in some specific implementations, the emitting lens, the receiving lens, and the collimating lens may be of an integrated structure, that is, the emitting lens, the receiving lens, and the collimating lens may be integrally formed by using a process such as injection molding, to effectively simplify a manufacturing process.

In an actual application, the foregoing optical component may be widely applied to devices that need to shape and bend an optical path.

For example, an embodiment of this application further provides a laser radar system. The laser radar system may include a laser, a detector, and the foregoing optical component. The laser is configured to project an emitted beam to an emitting lens, and the detector is configured to receive a reflected beam that passes through a receiving lens.

In some implementations, to enable the laser radar system to have an irradiated surface with a larger wide angle, a scanning mirror may be further disposed in the laser radar system. The scanning mirror is located in an optical path between the optical component and an irradiated object. When an emitted beam and a reflected beam are irradiated on the scanning mirror, the beam may be reflected by the scanning mirror to change a transmission path of light. When the scanning mirror is continuously rotated, a projection angle of the laser radar system may be expanded, so that an environment can be scanned and identified extensively.

In addition, this application further provides a mobile platform, including an information processing system and any one of the foregoing laser radar systems. The information processing system is configured to determine feature information of an irradiated object based on a reflected beam received by the detector in the laser radar system and an emitted beam generated by the laser in the laser radar system. The feature information includes but is not limited to information such as a distance, a direction, a height, a speed, a posture, and even a shape that are of the target. Specifically, the information processing system may accurately measure a propagation time of an optical pulse generated by the laser from being emitted to being reflected by the irradiated object back to the detector. Because a speed of light is known, the propagation time may be converted into a measurement of a distance, to determine a distance from the laser radar system to the irradiated object.

The mobile platform may further include an electronic control system coupled to the information processing system. The electronic control system is configured to control a motion status of the mobile platform based on the feature information that is of the irradiated object and that is generated by the information processing system.

Specifically, the electronic control system may include a communications interface, and communicate with the information processing system through the communications interface. The electronic control system is configured to control the motion status (such as a speed and a motion direction) of the mobile platform based on the feature information of the irradiated object.

### BRIEF DESCRIPTION OF DRAWINGS

FIG. 1 is a schematic diagram of an application scenario of a laser radar system according to an embodiment of this application;
FIG. 2 is a schematic diagram of a structure of a laser radar system according to an embodiment of this application;
FIG. 3 is a schematic diagram of a structure of a laser radar system according to an embodiment of this application;
FIG. 4 is a schematic diagram of a structure of an optical component according to an embodiment of this application;
FIG. 5 is a schematic diagram of a structure of another optical component according to an embodiment of this application;
FIG. 6 is a schematic diagram of a structure of still another optical component according to an embodiment of this application;
FIG. 7 is a schematic diagram of a structure of another laser radar system according to an embodiment of this application;
FIG. 8 is a schematic diagram of a structure of an optical component according to an embodiment of this application;
FIG. 9 is a schematic diagram of an exploded structure of an optical component according to an embodiment of this application;
FIG. 10 is a schematic cross-sectional diagram of a structure of an optical component according to an embodiment of this application;
FIG. 11 is a schematic diagram of an exploded structure of another optical component according to an embodiment of this application;
FIG. 12 is a schematic cross-sectional diagram of a structure of another optical component according to an embodiment of this application;
FIG. 13 is a schematic diagram of a structure of another laser radar system according to an embodiment of this application; and
FIG. 14 is a schematic diagram of a structure of a mobile platform according to an embodiment of this application.

### DESCRIPTION OF EMBODIMENTS

To make the objectives, technical solutions, and advantages of this application clearer, the following further describes this application in detail with reference to the accompanying drawings.

To facilitate understanding of a laser radar system provided in embodiments of this application, some application scenarios of the laser radar system are first described below.

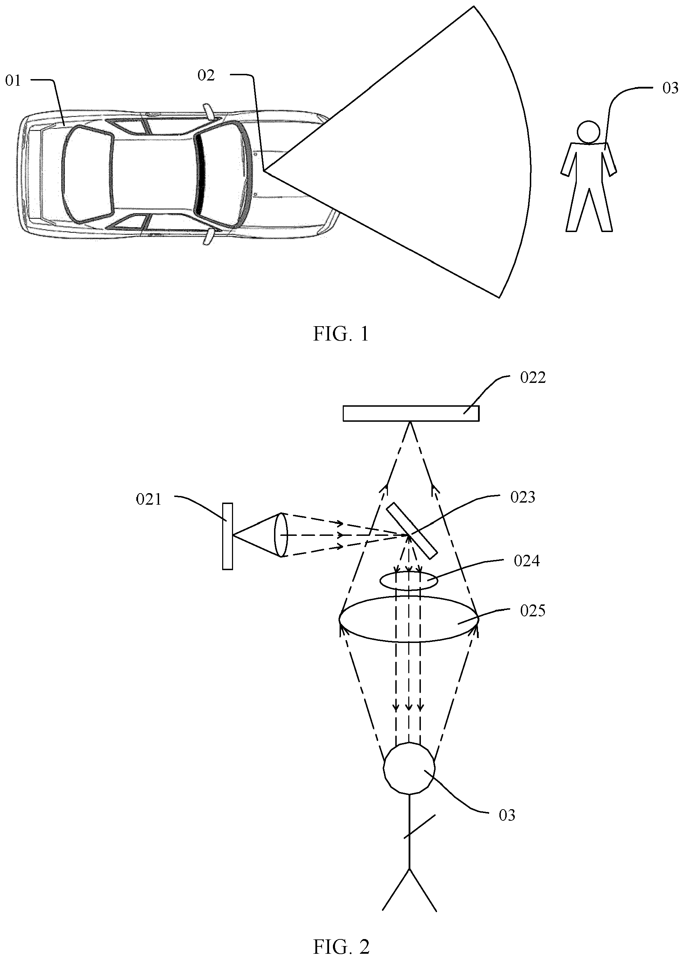

As shown in FIG. 1, in a vehicle (for example, a passenger vehicle, a logistics vehicle, or a robot) field, to enable a vehicle 01 to detect, identify, and classify a road condition or an environment in which the vehicle 01 is located, a laser radar system 02 may be installed in the vehicle 01. The laser radar system 02 can project a laser beam onto a road surface or an environment, and the laser beam is reflected after being projected onto an object 03 (for example, a road, a pedestrian, or a vehicle). The laser radar system 02 receives the reflected laser beam to detect and identify a road condition or an environment.

Specifically, as shown in FIG. 2, a conventional laser radar system 02 generally includes a laser 021, a detector 022, and a lens assembly. For ease of understanding, a laser beam generated by the laser 021 may be referred to as an emitted beam (represented by a dashed line in the figure), and a laser beam reflected by an irradiated object 03 may be referred to as a reflected beam (represented by a dash-dot line in the figure). To be specific, the laser 021 is configured to generate the emitted beam, and the detector 022 is configured to receive the reflected beam. The lens assembly may include a reflector 023, a collimating lens 024, and a receiving lens 025. The reflector 023 is configured to bend an emitted beam generated by the laser 021. The collimating lens 024 is configured to shape the emitted beam bent by the reflector 023, to shape the emitted beam into a parallel beam. The receiving lens 025 is configured to receive the emitted beam shaped by the collimating lens 024, and transmit the received emitted beam shaped by the collimating lens 024. When the transmitted beam is irradiated to the irradiated object 03, a laser beam reflected by the irradiated object 03 (which may also be referred to as a reflected beam) is focused on the detector 022 after passing through the receiving lens 025.

However, in the conventional lens assembly, the reflector 023, the collimating lens 024, and the receiving lens 025 are optical components independent of each other, and do not have a connection relationship with each other. In addition, each optical component needs to be fastened and installed by using an independent bracket. Consequently, a volume and a weight of the lens assembly are large, which is not conducive to implement a lightweight and miniaturized design. In addition, in an actual application, the reflector 023, the collimating lens 024, and the laser 021 need to be coupled and aligned, the receiving lens 025 and the detector 022 need to be coupled and aligned, and the reflector 023, the collimating lens 024, and the receiving lens 025 need to be coupled and aligned. During coupling and alignment, a dedicated calibration tool is required, and operations are complex and difficult, which is not conducive to mass production and assembling.

Therefore, this application provides a laser radar system that has a simple structure and a high integration level, and is easy to manufacture, install, and calibrate, and a mobile platform. To facilitate understanding of the laser radar system provided in embodiments of this application, the following provides specific descriptions with reference to the accompanying drawings.

Terms used in the following embodiments are merely intended to describe specific embodiments, but are not intended to limit this application. Terms "one", "a", "the foregoing", "the", and "the one" of singular forms used in this specification and the appended claims of this application are also intended to include plural forms like "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B each may be singular or plural. The character "/" usually indicates an "or" relationship between the associated objects.

Reference to "one embodiment" or "some embodiments" described in this specification or the like means that one or more embodiments of this application include a particular feature, structure, or characteristic described in combination with the embodiment. Therefore, in this specification, statements, such as "in an embodiment", "in some embodiments", "in some other embodiments", and "in other embodiments", that appear at different places in this specification do not necessarily mean reference to a same embodiment, instead, they mean "one or more but not all of the embodiments", unless otherwise specifically emphasized. The terms "include", "comprise", "have", and their variants all mean "include but is not limited to", unless otherwise specifically emphasized.

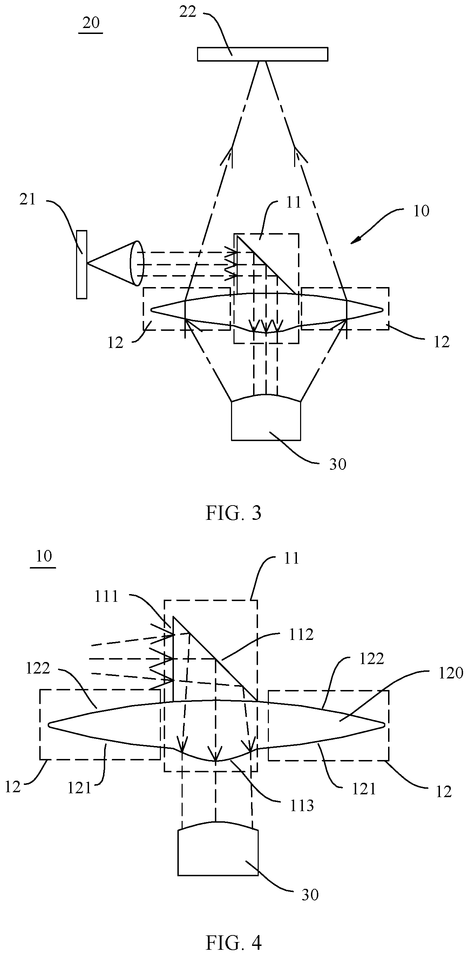

As shown in FIG. 3, in an embodiment provided in this application, a laser radar system 20 includes a laser 21, a detector 22, and an optical component 10. The laser 21 is configured to generate an emitted beam (represented by a dashed line with an arrow in the figure), and the detector 22 is configured to receive a reflected beam (represented by a dash-dot line with an arrow in the figure). The optical component 10 is configured to process the emitted beam generated by the laser 21 and then emit the processed emitted beam to an irradiated object 30, and is further configured to process a reflected beam reflected by the irradiated object 30 and then emit the processed reflected beam to the detector 22. Specifically, the optical component 10 has an emitted-beam processing part 11 and a reflected-beam processing part 12. The emitted-beam processing part 11 is configured to bend the emitted beam generated by the laser 21 and then emit the emitted beam to the irradiated object 30, and the reflected-beam processing part 12 is configured to focus the reflected beam reflected by the irradiated object 30 and then emit the reflected beam to the detector 22. The reflected beam is formed after the emitted beam generated by the laser 21 is reflected by the irradiated object 30. It should be known that, the detector 22 is an important component of a receiving system in the laser radar system 20, and is configured to restore the emitted beam reflected by the irradiated object 30 from an optical pulse to an electrical pulse, so that an information processing system matching the laser radar system 20 calculates a distance from the laser radar system 20 to the irradiated object 30 based on a laser ranging principle. The detector 22 may be a photoelectric detector in various forms, such as a photomultiplier, a semiconductor photodiode, an avalanche photodiode, and a multi-element detector of infrared and visible light, which is not specifically limited herein. In an embodiment provided in this application, the emitted-beam processing part 11 and the reflected-beam processing part 12 in the optical component 10 are integrated, so that a quantity of required brackets can be reduced, and a miniaturized, integrated, and modular design of the optical component 10 and the laser radar system 20 can be implemented.

Specifically, as shown in FIG. 4, the emitted-beam processing part 11 may include a first incident surface 111, a reflective surface 112, and a first emergent surface 113. The emitted beam is directed toward the irradiated object 30 after passing through the first incident surface 111, the reflective surface 112, and the first emergent surface 113. Specifically, the reflective surface 112 may bend the emitted beam to change a path of the emitted beam. When the first incident surface 111 or the first emergent surface 113 is of a non-planar structure (for example, a convex surface or a concave surface), a focal length of the emitted beam may be adjusted, so that the emitted beam can be processed into parallel light.

In an actual application, to enable the emitted beam that passes through the first incident surface 111 to be efficiently emitted from the first emergent surface 113 after being bent by the reflective surface 112, a main optical axis of the first incident surface 111 and a main optical axis of the first emergent surface 113 are symmetrically disposed with respect to a main optical axis of the reflective surface 112.

For example, when the first incident surface 111, the reflective surface 112, and the first emergent surface 113 are of a planar structure, an included angle between the main optical axis of the first incident surface 111 (which may also be understood as a normal of the first incident surface 111) and the main optical axis of the reflective surface 112 (which may also be understood as a normal of the reflective surface 112) may be 30°, 45°, 60°, or the like, and an included angle between the first emergent surface 113 (which may also be understood as a normal of the first emergent surface 113) and the reflective surface 112 (which may also be understood as the normal of the reflective surface) may be 30°, 45°, 60°, or the like.

In addition, to ensure that the emitted beam bent by the reflective surface 112 can be efficiently emitted from the first emergent surface 113, a projection of the reflective surface 112 on the first emergent surface 113 is located inside the first emergent surface 113, that is, a projected contour of the reflective surface 112 on the first emergent surface 113 is not larger than a contour of the first emergent surface 113.

On the other side, as shown FIG. 3 and FIG. 4, to enable the reflected-beam processing part 12 to effectively process the reflected beam, the received-beam processing part 12 may include a second incident surface 121 and a second emergent surface 122, and the reflected beam is directed toward the detector 22 after passing through the second incident surface 121 and the second emergent surface 122.

In a specific implementation, the second incident surface 121 may be of a planar structure, or may be of a convex or concave surface structure. Correspondingly, the second emergent surface 122 may be of a planar structure, or may be of a convex or concave structure.

In a specific application, in order that an emitted beam that passes through the optical component 10 can be effectively directed toward the irradiated object 30, and further a reflected beam reflected by the irradiated object 30 can be effectively received, the first emergent surface 113 and the second incident surface 121 have a same orientation. It may also be understood that both the first emergent surface 113 and the second incident surface 121 face the irradiated object 30, so that an emitted beam emitted from the first emergent surface 113 can be effectively irradiated on the irradiated object 30, and a reflected beam reflected by the irradiated object 30 can be effectively received by the second incident surface 121.

In some implementations, the first emergent surface 113, the second incident surface 121, and the second emergent surface 122 may have various relative positions.

For example, as shown in FIG. 4, in an implementation provided in this application, main optical axes of the first emergent surface 113, the second incident surface 121, and the second emergent surface 122 coincide.

In a specific implementation, because the first emergent surface 113 and the second incident surface 121 have the same orientation, to prevent the first emergent surface 113 and the second incident surface 121 from affecting each other, a projection of the first emergent surface 113 on the second incident surface 121 may be located inside the second incident surface 121, and a projected contour of the first emergent surface 113 on the second incident surface 121 is smaller than a contour of the second incident surface 121.

For example, the first emergent surface 113, the second incident surface 121, and the second emergent surface 122 may be located on a same convex lens 120. The second emergent surface 122 may be located on an upper surface of the convex lens 120, and the first emergent surface 113 and the second incident surface 121 may be located on a lower surface of the convex lens 120. Specifically, a middle part of the lower surface of the convex lens 120 may be used as the first emergent surface 113, and another part of the lower surface of the convex lens 120 may be used as the second incident surface 121.

In a specific implementation, an included angle between the main optical axis of the reflective surface 112 and the main optical axis of the first emergent surface 113 may be various. For example, the included angle between the main optical axis of the reflective surface 112 and the main optical axis of the first emergent surface 113 may be between 0° and 90°, for example, 30°, 45°, or 60°. In some specific implementations, the included angle between the main optical axis of the reflective surface 112 and the main optical axis of the first emergent surface 113 may be properly selected and adjusted based on a relative position of the laser 21 and the detector 22.

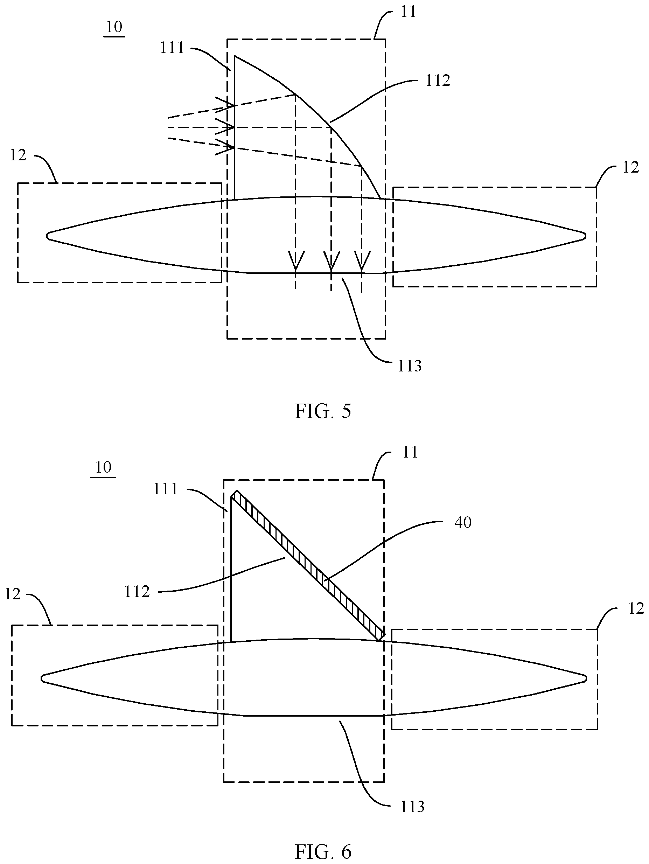

In addition, the reflective surface 112 may also have various shapes. For example, the reflective surface 112 may be a plane, a cylindrical surface, a spherical surface, or the like. Specifically, when the reflective surface 112 is of a non-planar structure such as a convex surface or a concave surface, the reflective surface 112 may also shape the emitted beam. As shown in FIG. 5, in an embodiment provided in this application, the reflective surface 112 is of a concave surface structure, so that the reflective surface 112 can focus an emitted beam. It may be understood that, in another implementation, when the reflective surface 112 is a convex surface, the reflective surface 112 may diverge an emitted beam. In a specific implementation, the reflective surface 112 may be set to a structure such as a plane, a convex surface, or a concave surface based on different requirements.

In addition, to improve reflective efficiency of the reflective surface 112, as shown in FIG. 6, in an embodiment provided in this application, a high-reflective coating 40 may be disposed on a back surface of the reflective surface 112, to improve reflective efficiency of the reflective surface 112.

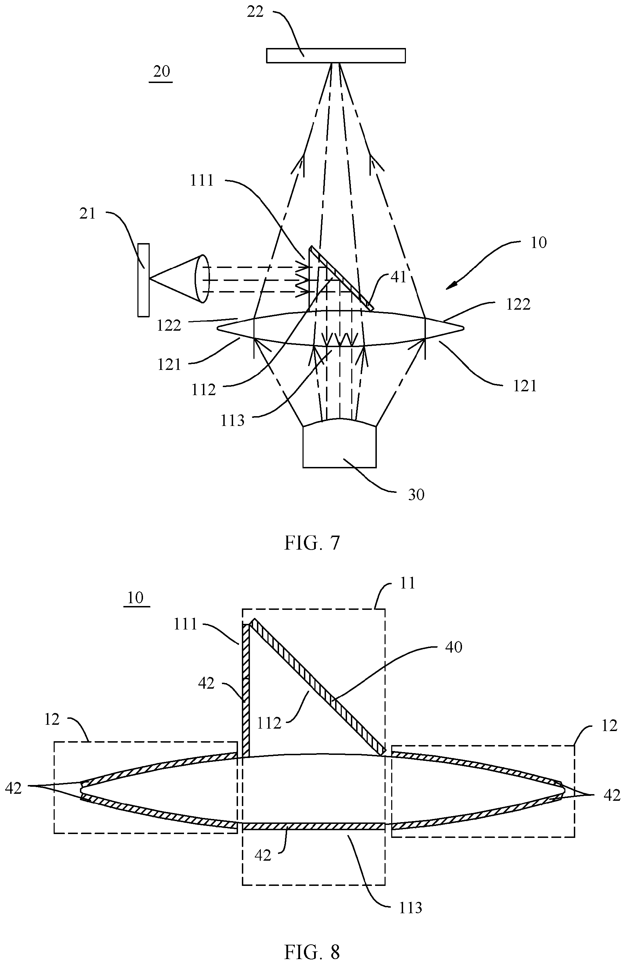

Alternatively, in some specific implementations, as shown in FIG. 7, a polarizing coating 41 may be disposed on a back surface of the reflective surface 112. Transmission efficiency of a reflected beam may be improved by disposing the polarizing coating 41. Specifically, as shown in FIG. 7, after reflected beams are reflected from the irradiated object 30 to the optical component 10, some reflected beams are directly projected onto the detector 22 after passing through the second incident surface 121 and the second emergent surface 122, and the other beams may be projected onto the detector 22 after passing through the first emergent surface 113 and the reflective surface 112, to improve transmission efficiency of the reflected beams. In a specific implementation, the polarizing coating 41 may be attached to the back surface of the reflective surface 112. Alternatively, a polarization beam splitter (polarization beam splitter, PBS) may be used as the emitted-beam processing part 11. Specifically, the polarization beam splitter is a cube structure formed through gluing after a multi-layer coating structure is plated on an inclined surface of a right-angle prism. The inclined surface may be used as the reflective surface 112, the multi-layer coating structure may be used as the polarizing coating 41.

In addition, to increase transmission efficiency of the emitted beam, as shown in FIG. 8, in an embodiment provided in this application, antireflective coatings 42 may be disposed on the first incident surface 111 and the first emergent surface 113 of the emitted-beam processing part 11. Correspondingly, to increase transmission efficiency of the reflected beam, antireflective coatings 42 may also be disposed on the second incident surface 121 and the second emergent surface 122 of the reflected-beam processing part 12.

To reduce space occupation of the optical component 10 and a quantity of required brackets, in an embodiment provided in this application, the emitted-beam processing part 11 and the reflected-beam processing part 12 may be fastened as an integrated structure. In a specific implementation, the emitted-beam processing part 11 and the reflected-beam processing part 12 may be fastened as an integrated structure in a plurality of manners.

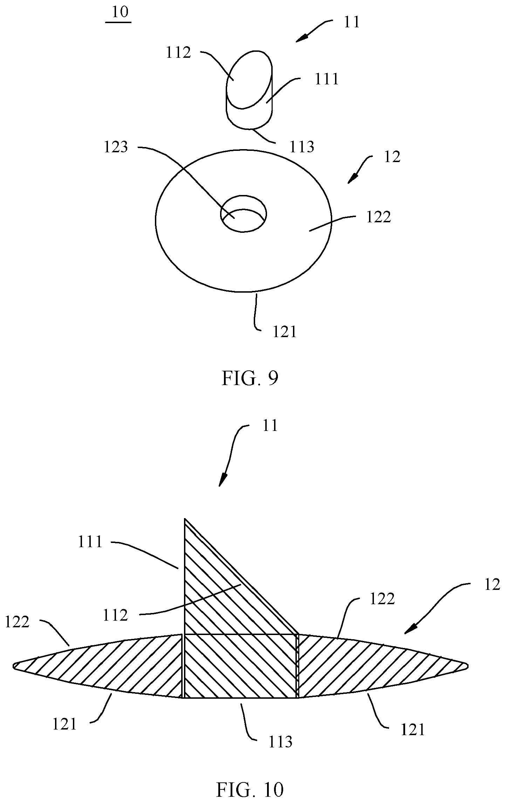

For example, as shown in FIG. 9, in an embodiment provided in this application, the emitted-beam processing part 11 and the reflected-beam processing part 12 are two optical components independent of each other, and the emitted-beam processing part 11 and the reflected-beam processing part 12 may be fastened as an integrated structure in a bonding manner. For example, the emitted-beam processing part 11 and the reflected-beam processing part 12 may be bonded by using an optical adhesive material such as Canada balsam, fir resin adhesive, epoxy adhesive, or polyurethane adhesive.

Specifically, as shown in FIG. 10, the reflected-beam processing part 12 is constructed as a convex lens, a through hole 123 is provided at the main optical axis of the reflected-beam processing part 12, an upper surface of the reflected-beam processing part 12 may be used as the second emergent surface 122, and a lower surface of the reflected-beam processing part 12 may be used as the second incident surface 121. The emitted-beam processing part 11 is constructed into a cylindrical structure, an upper end surface of the emitted-beam processing part 11 is an oblique surface, a back of the oblique surface may be used as the reflective surface 112, a lower end surface of the emitted-beam processing part 11 may be used as the first emergent surface 113, and a part of an outer circumferential surface of the emitted-beam processing part 11 may be used as the first incident surface 111.

As shown FIG. 10, when the optical component 10 is fastened as a whole, the emitted-beam processing part 11 may be inserted into the through hole of the reflected-beam processing part 12, and the optical adhesive material may be filled between the outer circumferential surface of the emitted-beam processing part 11 and an inner wall of the through hole 123, so that the emitted-beam processing part 11 is fixedly connected to the received-beam processing part 12.

It may be understood that the emitted-beam processing part 11 and the received-beam processing part 12 may also be manufactured into an integrated structure by using a process such as injection molding.

In addition, in some implementations, the emitted-beam processing part 11 may alternatively include two optical components that are independent of each other.

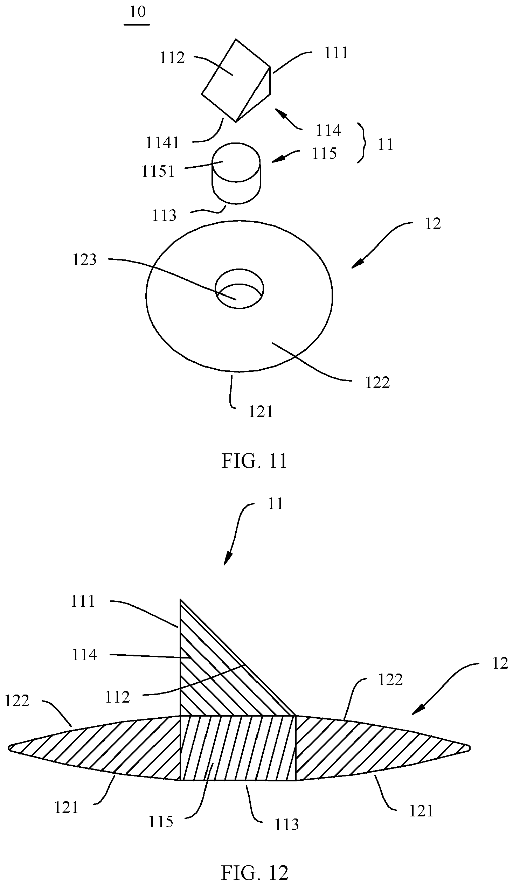

For example, as shown in FIG. 11, in an embodiment provided in this application, an emitted-beam processing part 11 includes a reflecting part 114 and a collimating part 115. Specifically, the reflecting part 114 is constructed as a triangular block, and the collimating part 115 is constructed as a cylindrical structure. An oblique surface of the reflecting part 114 may be used as a reflective surface 112, one right-angle surface opposite to the reflective surface 112 may be used as a first incident surface 111, and the other right-angle surface opposite to the reflective surface 112 may be used as a first mounting surface 1141. An upper end surface of the collimating part 115 may be used as a second mounting surface 1151 for engaging with the first mounting surface 1141, and a lower end surface of the collimating part may be used as a first emergent surface 113.

As shown in FIG. 12, when an optical component 10 is fastened as a whole, the collimating part 115 may be inserted into a through hole 123 of a received-beam processing part 12, and an optical adhesive material may be filled between an outer circumferential surface of the collimating part 115 and an inner wall of the through hole 123, to fixedly connect the collimating part 115 and the received-beam processing part 12. An optical material may be further filled between the first mounting surface 1141 and the second mounting surface 1151, to fixedly connect the reflecting part 114 and the collimating part 115, and finally implement a fixed connection between the reflecting part 114, the collimating part 115, and the received-beam processing part 12.

In some implementations, the collimating part 115 and the received-beam processing part 12 may alternatively be an integrated structure. For example, the collimating part 115 and the received-beam processing part 12 may be manufactured into an integrated structure by using a process such as injection molding.

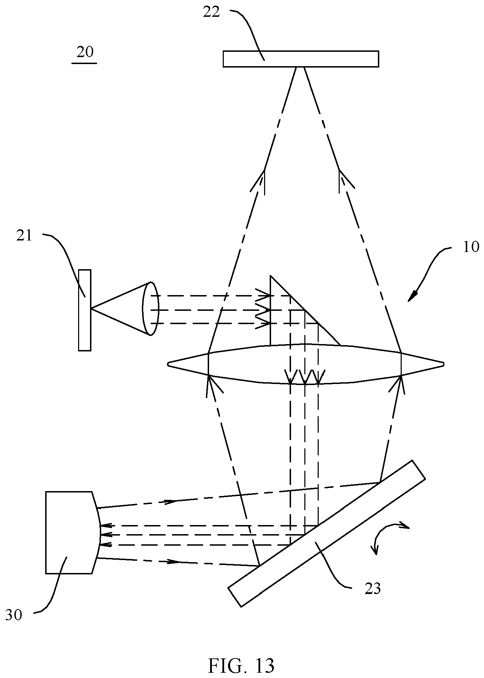

As shown in FIG. 13, in some implementations, to enable the laser radar system 20 to have an irradiated surface with a larger wide angle, a scanning mirror 23 may be further disposed in the laser radar system 20. The scanning mirror 23 is located in an optical path between the optical component 10 and the irradiated object 30. When an emitted beam and a reflected beam are irradiated on the scanning mirror 23, the beam may be reflected by the scanning mirror 23 to change a transmission path of light. When the scanning mirror 23 is continuously rotated, a projection angle of the laser radar system 20 may be expanded, so that an environment can be scanned and identified in a large range.

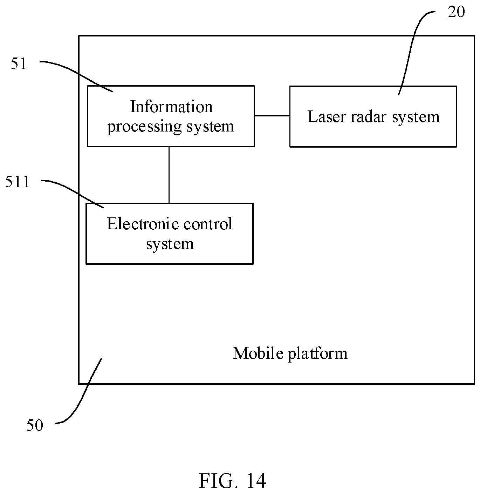

As shown in FIG. 14, an embodiment of this application further provides a mobile platform 50, including an information processing system 51 and the laser radar system 20 in any one of the foregoing embodiments. The laser radar system 20 is configured to determine information about an irradiated object. For a specific implementation of the laser radar system 20, refer to the foregoing embodiment. Repeated content is not described again. The information processing system 51 is configured to determine feature information of an irradiated object based on a reflected beam received by the detector 22 in the laser radar system 20 and an emitted beam generated by the laser 21 in the laser radar system 20. The feature information includes but is not limited to information such as a distance, a direction, a height, a speed, a posture, and even a shape that are of the target. Specifically, the information processing system 51 may accurately measure a propagation time of an optical pulse generated by the laser 21 from being emitted to being reflected by the irradiated object back to the detector 22. Because a speed of light is known, the propagation time may be converted into a measurement of a distance, to determine a distance from the laser radar system 20 to the irradiated object 30.

In a specific implementation, the information processing system 51 may be a hardware apparatus in various forms, such as a processor, a microprocessor (for example, a digital signal processor, DSP), an AI chip (for example, a field programmable gate array, FPGA), and an application-specific integrated circuit (for example, an application-specific integrated circuit, ASIC).

Further, if the laser 21 continuously scans the irradiated object 30 by using a pulse laser, data of all target points on the irradiated object 30 may be obtained, and after an information processing apparatus in the receiving system performs imaging processing by using the data, a precise three-dimensional stereoscopic image may be obtained.

The mobile platform 50 further includes an electronic control system 511 coupled to the foregoing information processing system 51. The electronic control system 511 includes a communications interface, and communicates with the information processing system 51 through the communications interface. The electronic control system 511 is configured to control a motion status of the mobile platform 50 based on the feature information of the irradiated object.

For example, the mobile platform 50 is an autonomous driving vehicle. The autonomous driving vehicle includes the laser radar system 20, the information processing system 51, and the electronic control system 511. The electronic control system 511 may be an electronic control unit (electronic control unit, ECU), that is, an in-vehicle computer. When the laser radar system 20 identifies that an obstacle exists ahead, and the information processing system 51 calculates feature information of the obstacle, the electronic control system 511 may control, based on the feature information of the obstacle and navigation information (such as a map), a drive apparatus of the autonomous driving vehicle to decelerate, stop, or turn around; or when the laser radar system 20 and the information processing system 51 determine that no obstacle exists, the electronic control system 511 may control, based on information indicating that no obstacle exists, a drive apparatus of the autonomous driving vehicle to travel at a constant speed or travel at an accelerated speed.

In an optional embodiment, a specific type of the mobile platform 50 is not limited. For example, the mobile platform may be a mobile platform such as a vehicle, a ship, an airplane, a train, a spacecraft, or an uncrewed aerial vehicle, which is applicable to the technical solutions of this application.

In addition, the mobile platform 50 may further include a global positioning system (global positioning system, GPS) apparatus and an inertial measurement unit (inertial measurement unit, IMU) apparatus. The laser radar system 20 and the information processing system 51 may obtain feature information such as a position and a speed of an irradiated object based on measurement data of the GPS apparatus and the IMU apparatus. For example, the information processing system 51 may provide geographic position information of the mobile platform by using the GPS apparatus in the mobile platform 50, and record a posture and steering information of the mobile platform by using the IMU apparatus. After a distance to the irradiated object is determined based on an emitted beam of the laser radar system 20 and a reflected beam, the information processing system 51 may convert a measurement point of the irradiated object from a relative coordinate system to a location point in an absolute coordinate system by using at least one of the geographical location information provided by the GPS apparatus or the posture and the steering information provided by the IMU apparatus, to obtain geographical location information of the irradiated object, so that the laser radar system 20 can be applied to the mobile platform.

The foregoing descriptions are merely specific implementations of this application, but are not intended to limit the protection scope of this application. Any variation or replacement figured out by a person skilled in the art based on the technical solutions of this application within the technical scope disclosed in this application shall fall within the protection scope of this application. Therefore, the protection scope of this application shall be subject to the protection scope of the claims.

## Claims

1. A laser radar system, comprising:
a laser, configured to generate an emitted beam; an optical component, comprising an emitted-beam processing part and a reflected-beam processing part, wherein the emitted-beam processing part is configured to bend the emitted beam and then emit the emitted beam to an irradiated object; and
the reflected-beam processing part is configured to: focus a reflected beam formed after the irradiated object reflects the emitted beam, and transmit the reflected beam to a detector; and
the detector, configured to receive the reflected beam.

2. The laser radar system according to claim 1, wherein the emitted-beam processing part comprises a first incident surface, a reflective surface, and a first emergent surface, and the reflective surface is configured to bend the emitted beam; and
the emitted beam is directed toward the irradiated object after passing through the first emergent surface, the reflective surface, and the first emergent surface.

3. The laser radar system according to claim 2, wherein a main optical axis of the first incident surface and a main optical axis of the first emergent surface are symmetrically disposed with respect to a main optical axis of the reflective surface.

4. The laser radar system according to claim 2 or 3, wherein the reflected-beam processing part comprises a second incident surface and a second emergent surface; and
the reflected beam is directed toward the detector after passing through the second incident surface and the second emergent surface.

5. The laser radar system according to claim 4, wherein the first emergent surface and the second incident surface have a same orientation.

6. The laser radar system according to claim 5, wherein main optical axes of the first emergent surface, the second incident surface, and the second emergent surface coincide.

7. The laser radar system according to claim 6, wherein a projection of the first emergent surface on the second incident surface is located inside the second incident surface.

8. The laser radar system according to any one of claims 2 to 7, wherein a projection of the reflective surface on the first emergent surface is located inside the first emergent surface.

9. The laser radar system according to any one of claims 2 to 8, wherein the reflective surface is a cylindrical surface, a spherical surface, or a plane.

10. The laser radar system according to any one of claims 2 to 9, wherein a high-reflective coating is disposed on the reflective surface.

11. The laser radar system according to any one of claims 2 to 9, wherein a polarizing coating is disposed on the reflective surface.

12. The laser radar system according to any one of claims 2 to 11, wherein the first incident surface is a cylindrical surface, a spherical surface, or a plane.

13. The laser radar system according to any one of claims 2 to 12, wherein an antireflective coating is disposed on the first incident surface.

14. The laser radar system according to any one of claims 4 to 13, wherein the second incident surface is a cylindrical surface, a spherical surface, or a plane.

15. The laser radar system according to any one of claims 4 to 14, wherein an antireflective coating is disposed on the second incident surface.

16. The laser radar system according to any one of claims 4 to 15, wherein the second emergent surface is a cylindrical surface, a spherical surface, or a plane.

17. The laser radar system according to any one of claims 4 to 16, wherein an antireflective coating is disposed on the second emergent surface.

18. The laser radar system according to any one of claims 1 to 17, further comprising a scanning mirror; and
the scanning mirror is configured to reflect the emitted beam passing through the emitted-light processing part to the irradiated object, and is configured to reflect the reflected beam reflected by the irradiated object to the received-light processing part.

19. A mobile platform, comprising an information processing system and the laser radar system according to any one of claims 1 to 18, wherein
the information processing system is signally connected to the laser radar system, and is configured to calculate feature information of an irradiated object based on a signal of the laser radar system.

20. The mobile platform according to claim 19, further comprising an electronic control system, wherein
the electronic control system is signally connected to the information processing system, and is configured to control a motion status of the mobile platform based on the feature information that is of the irradiated object and that is generated by the information processing system.
